# EUROPÄISCHE PATENTSCHRIFT

(11) **EP 3 088 220 B1**
(45) Veröffentlichungstag und Bekanntmachung des Hinweises auf die Patenterteilung: **13.03.2019**
(21) Anmeldenummer: 16165980.0
(22) Anmeldetag: 19.04.2016
(51) Int. Cl.: B60K 37/06, B60H 1/00, B60K 35/00

(54) **VERFAHREN UND BEDIENVORRICHTUNG ZUM EINSTELLEN EINER KLIMATISIERUNGSVORRICHTUNG EINES FAHRZEUGS**
METHOD AND OPERATING DEVICE FOR ADJUSTING AN AIR CONDITIONING DEVICE OF A VEHICLE
PROCEDE ET DISPOSITIF DE COMMANDE DESTINES A REGLER UN DISPOSITIF DE CLIMATISATION D'UN VEHICULE AUTOMOBILE

(30) Priorität: 30.04.2015 DE 102015207975
(43) Veröffentlichungstag der Anmeldung: 02.11.2016
(73) Patentinhaber: Volkswagen AG, 38436 Wolfsburg (DE)
(72) Erfinder: Wäller, Christoph, 38106 Braunschweig (DE); Enke, Lukas, 10999 Berlin (DE); Vrielink, Nils, 31234 Edemissen (DE)

(56) Entgegenhaltungen:
- DE-A1-102007 023 502
- DE-A1-102012 016 109
- DE-A1-102012 021 519
- JP-A- 2013 082 379

## Beschreibung

Die vorliegende Erfindung betrifft ein Verfahren und eine Bedienvorrichtung zum Einstellen einer Klimatisierungsvorrichtung eines Fahrzeugs. Sie betrifft ferner ein Fahrzeug mit einer solchen Bedienvorrichtung.

In einem Kraftfahrzeug gibt es eine Vielzahl von Funktionseinrichtungen, die erforderlich sind, um das Fahrzeug zu führen, die der Sicherheit und dem Komfort der Fahrzeuginsassen dienen und die den Fahrzeuginsassen schließlich Informationen und Warnungen anzeigen. Zu diesen Funktionseinrichtungen zählen beispielsweise Einrichtungen zum Steuern der lichttechnischen Einrichtungen des Fahrzeugs, eine Klimatisierungsvorrichtung, Fahrerassistenzsysteme, Navigationssysteme, Telekommunikationssysteme und Multimediasysteme. Um diese Funktionseinrichtungen zu bedienen ist zumindest eine Vorrichtung für Eingaben des Nutzers und eine Anzeigevorrichtung zum Darstellen von Informationsanzeigen der Funktionseinrichtungen erforderlich. Ferner wird die Bedienung der Funktionseinrichtungen häufig von Anzeigen auf einem Display unterstützt, welches beispielsweise in der Mittelkonsole des Fahrzeugs angeordnet ist.

Insbesondere das Einstellen einer Klimatisierungsvorrichtung in einem Fahrzeug ist eine komplexe Aufgabe: Das Innenklima im Fahrzeug ist aus einer Vielzahl verschiedener Parameter zusammengesetzt, beispielsweise der Temperatur und dem Luftstrom in verschiedenen Bereichen des Fahrzeuginnenraums. Eine Klimaanlage verfügt daher in der Regel über mehrere Elemente, etwa Ausströmer, die einen Strom temperierter Luft in das Fahrzeug leiten. Diese Elemente der Klimaanlage müssen so konfiguriert werden, dass das gewünschte Klima im Fahrzeug erreicht werden kann. Dem Nutzer werden daher typischerweise Einstellmöglichkeiten angeboten, die eine Anpassung der Konfiguration ermöglichen.

Die DE 10 2007 023 502 A1 beschreibt eine Anzeige- und Bedieneinheit für die Klimaanlage eines Fahrzeugs, wobei Personensymbole dargestellt werden, deren Kopf, Rumpf und Füße jeweils Klimazellen der einzelnen Fahrzeuginsassen symbolisieren. Ferner werden auf diese Klimazellen gerichtete Pfeile dargestellt. Anhand dieser Symbole können Einstellungen der Klimaanlage vorgenommen werden.

Ferner wird bei der in der DE 10 2012 016 109 A1 beschriebenen Bedienvorrichtung zum Einstellen einer Klimatisierungsvorrichtung eines Fahrzeugs eine graphische Darstellung des Innenraums des Fahrzeugs angezeigt. Diese umfasst Schaltsymbole, welche die Einströmrichtung, -rate und/oder Temperatur der einströmenden Luft darstellen und an denen Eingaben vorgenommen werden können.

Die DE 10 2012 016 109 A1, die den nächstkommenden Stand der Technik darstellt, beschreibt eine Bedienvorrichtung zum Einstellen einer Klimatisierungsvorrichtung eines Fahrzeugs. Die Klimatisierungsvorrichtung umfasst Belüftungselemente zum Klimatisieren des Innenraums des Fahrzeugs. Die Bedienvorrichtung weist eine Anzeigefläche und eine Eingabevorrichtung zum Eingeben von Steuerbefehlen für die Klimatisierungsvorrichtung des Fahrzeugs auf. Ferner umfasst die Bedienvorrichtung eine Steuervorrichtung, die mit der Anzeigefläche und der Eingabevorrichtung gekoppelt ist, mit der Graphikdaten für eine Anzeige auf der Anzeigefläche erzeugbar sind. Mit der Steuervorrichtung sind mittels der Eingabevorrichtung eingegebene Steuerbefehle in Steuersignale für die Klimatisierungsvorrichtung des Fahrzeugs umsetzbar. Die Steuervorrichtung ist so ausgebildet, dass solche Graphikdaten erzeugt werden, dass auf der Anzeigefläche eine graphische Darstellung des Innenraums des Fahrzeugs wiedergegeben wird, wobei innerhalb der graphischen Darstellung des Innenraums des Fahrzeugs Schaltsymbole angezeigt werden, welche die Einströmrichtung und/oder die Einströmrate und/oder die Einströmtemperatur der durch die Belüftungselemente in den Innenraum einströmenden Luft darstellen.

Die JP 2013 082379 A beschreibt eine Bedienvorrichtung für eine Klimatisierungsvorrichtung für ein Fahrzeug, die es einem Benutzer erlaubt, eine Darstellung eines Funktionsschalters gemäß seinen Präferenzen auszuwählen. Die Bedienvorrichtung umfasst eine berührungsempfindliche Anzeigevorrichtung zum Darstellen von Funktionsschaltern und zum Eingeben von Steuerbefehlen zum Ändern der Arbeitseinstellungen der Klimatisierungsvorrichtung. Die Bedienvorrichtung umfasst zudem eine Kontrollvorrichtung für die Anzeigevorrichtung. Mittels der Kontrollvorrichtung kann die Darstellung der Funktionsschalter angepasst werden. Beispielsweise können die Funktionsschalter einer perspektivischen Darstellung des Innenraums des Fahrzeugs überlagert werden.

Die DE 10 2007 023 502 A1 beschreibt eine Anzeige- und Bedieneinheit für eine Fahrzeug-, Heiz- oder Klimaanlage mit einem Zugriff auf unterschiedliche Anzeige- und Bedienmenüs über einen Bordmonitor oder einzelne Satellitensysteme. Dabei ist eine individuelle Anpassung an die möglichen Komfortwünsche eines Fahrzeuginsassen in den jeweiligen Klimazonen des Fahrzeugs durch ein Automatikprogramm vorgesehen. Anhand von Symbolen sind die Werte für Temperatur, Luftmengenzufuhr und Luftgeschwindigkeit für die verschiedenen Klimazellen eines Fahrzeuginsassen am Bordmonitor darstellbar. Auf einem zentralen Bedienteil sind diese Werte von jedem Insassen selbst wählbar.

Die DE 10 2012 021 519 A1 beschreibt ein Verfahren zum Einstellen einer Belüftung eines Innenraums eines Kraftfahrzeugs. Auf einer Anzeige- und Bedieneinheit wird ein anzuströmender Anströmbereich in dem Innenraum ausgewählt. Mindestens ein variabel einstellbarer Luftausströmer wird dann so angesteuert, dass dieser einen Luftstrom auf den Anströmbereich richtet. Die Anzeige- und Bedieneinheit kann auf einer Anzeige eine Insassenfigur mit auswählbaren Körperpartien ausgeben, wobei nach Auswählen einer der Körperpartien der Luftausströmer so angesteuert wird, dass dieser den Luftstrom auf die ausgewählte Körperpartie richtet.

Bei der Bedienung von Einrichtungen eines Fahrzeugs ergeben sich sehr spezielle Anforderungen. Die Bedienung erfolgt im Fahrzeug nämlich unter anderem durch den Fahrer. Der Bedienvorgang sollte daher nicht zu einer Ablenkung des Fahrers während der Fahrt führen. Hierfür sollte der Bedienvorgang so schnell und einfach wie möglich vom Fahrer erfassbar und sehr schnell durchführbar sein, sodass der Fahrer beim Durchführen des Bedienvorgangs seinen Blick allenfalls sehr kurzzeitig vom Fahrgeschehen abwenden muss.

Der vorliegenden Erfindung liegt daher die Aufgabe zugrunde, ein Verfahren und eine Bedienvorrichtung zum Einstellen einer Klimatisierungsvorrichtung eines Fahrzeugs bereitzustellen, die eine einfache, schnelle und intuitive Einstellung der Klimatisierungsvorrichtung des Fahrzeugs erlauben.

Erfindungsgemäß wird diese Aufgabe durch ein Verfahren mit den Merkmalen des Anspruchs 1 und eine Bedienvorrichtung mit den Merkmalen des Anspruchs 7 gelöst. Vorteilhafte Ausgestaltungen und Weiterbildungen ergeben sich aus den abhängigen Ansprüchen.

Bei dem erfindungsgemäßen Verfahren werden durch Belüftungselemente erzeugte Parameter der Klimatisierungsvorrichtung bestimmt und eine Bedienabsicht eines Benutzers wird erfasst.

Als Anzeigemodus wird ein Einstellmodus der Klimatisierungsvorrichtung aktiviert, wenn eine Bedienabsicht eines Nutzers erfasst wird, und als Anzeigemodus wird ein Statusmodus der Klimatisierungsvorrichtung aktiviert, wenn keine Bedienabsicht erfasst wird. In Abhängigkeit von dem Anzeigemodus werden Graphikdaten einer graphischen Darstellung des Innenraums des Fahrzeugs so erzeugt, dass, wenn der Statusmodus aktiviert ist, der Innenraum des Fahrzeugs und die Parameter der Klimatisierungsvorrichtung im Innenraum dargestellt werden. Wenn der Einstellmodus aktiviert ist, wird eine Querschnittsprojektion des Innenraums dargestellt und es werden die Parameter der Klimatisierungsvorrichtung in einer Ebene der Querschnittsprojektion dargestellt, wobei die Darstellung bedienbare Graphikschaltelemente umfasst. Die Darstellung der Querschnittsprojektion des Innenraums im Einstellmodus umfasst zumindest eine auf einem Fahrzeugsitz sitzende Person. Die Perspektive der Darstellung ist dabei in Richtung der Fahrzeuglängsachse ausgerichtet. Die Graphikdaten werden angezeigt und eine Eingabe des Nutzers wird erfasst, die in Bezug auf die bedienbaren Graphikschaltelemente auf oder vor der Anzeigefläche ausgeführt wird. In Abhängigkeit davon, in Bezug zu welchem bedienbaren Graphikschaltelement die Eingabe ausgeführt wurde, wird ein Steuerbefehl für die Klimatisierungsvorrichtung des Fahrzeugs erzeugt.

Mittels des erfindungsgemäßen Verfahrens kann der Nutzer die Klimatisierungsvorrichtung des Fahrzeugs vorteilhafterweise besonders einfach, schnell und intuitiv einstellen. Dies wird insbesondere dadurch ermöglicht, dass zwei Anzeigemodi definiert sind. Im Statusmodus erhält der Nutzer einen schnell erfassbaren Überblick über die Parameter der Klimatisierungsvorrichtung, die durch die Belüftungselemente erzeugt werden, während im Einstellmodus eine detailliertere Darstellung der Parameter erfolgt und Einstellungen vorgenommen werden können. Die dargestellten Parameter können beispielsweise eine Temperaturverteilung im Fahrzeug oder die Eigenschaften eines von den Belüftungselementen erzeugten Luftstroms im Innenraum des Fahrzeugs umfassen. Der Wechsel zwischen diesen beiden Anzeigemodi erfolgt automatisch, wobei eine Bedienabsicht des Nutzers erfasst wird. Befindet sich die Anzeige zunächst im Statusmodus, so wechselt sie zum Einstellmodus, sobald erfasst wird, dass der Nutzer eine Eingabe vornehmen will.

Die Bedienabsicht des Nutzers kann dabei auf verschiedene Weisen erfasst werden. Beispielsweise kann die Annäherung des Nutzers an ein Bedienelement erfasst werden, der Benutzer kann seine Bedienabsicht durch das Betätigen eines Schaltelements explizit deutlich machen oder es kann die Betätigung eines Bedienelements des Fahrzeugs erfasst werden.

Die Anzeige im Statusmodus dient insbesondere dazu, dem Nutzer den gegenwärtigen Zustand der Klimatisierungsvorrichtung, insbesondere im Bezug zu den Belüftungselementen, darzustellen. Dies erfolgt mittels einer Darstellung des Innenraums des Fahrzeugs, die Informationen über die Parameter der Klimatisierungsvorrichtung im Innenraum umfasst. Der Benutzer erhält so eine schnell und leicht erfassbare Übersicht und kann die Parameter den einzelnen Bereichen im Innenraum zuordnen. Die Parameter der Klimatisierungsvorrichtung im Innenraum können dabei etwa durch graphische Symbole angezeigt werden, beispielsweise durch Pfeile oder andere graphische Symbole.

Im Einstellmodus wird eine Querschnittsprojektion des Innenraums des Fahrzeugs dargestellt. Es können verschiedene Bereiche des Innenraums dargestellt werden, deren Darstellung auf eine Querschnittsebene im Fahrzeug projiziert dargestellt wird. Beispielsweise kann die Darstellung in der Querschnittsprojektion Elemente des vorderen Bereichs der Fahrgastzelle umfassen. Dazu können beispielsweise das Armaturenbrett, die Mittelkonsole und der vor dem Beifahrer liegende Bereich gehören. Ferner kann der hintere Bereich der Fahrgastzelle in der Querschnittsprojektion dargestellt werden, beispielsweise die Rückseiten der Vordersitze.

Ferner umfasst die Darstellung die Parameter der Klimatisierungsvorrichtung in einer Ebene der Querschnittsprojektion. Zur Bestimmung der Parameter können einerseits Sensoren im Innenraum des Fahrzeugs dienen, die beispielsweise die tatsächliche Temperaturverteilung messen. Ferner können die Parameter aus der Konfiguration der Klimatisierungsvorrichtung bestimmt werden, etwa durch die Simulation einer Verteilung im Innenraum anhand von Daten über die Ausrichtung und Einstellung der Elemente der Klimatisierungsvorrichtung. Dies entspricht einer Soll-Verteilung der Parameter im Innenraum, die durch die jeweilige Konfiguration der Klimatisierungsvorrichtung erreicht werden soll. Die theoretische Bestimmung der Parameter kann dabei ohne den Einsatz besonderer Sensoren im Innenraum erfolgen, deren Einbau zu weiterem Aufwand und Kosten führen würde.

Die Darstellung im Einstellmodus umfasst bedienbare Graphikschaltelemente. Unter einem Graphikschaltelement wird im Sinne der Erfindung ein Steuerelement einer graphischen Benutzerschnittstelle verstanden. Graphikschaltelemente unterscheiden sich von Elementen und Flächen zur reinen Informationsanzeige, sogenannten Anzeigeelementen, darin, dass sie auswählbar sind. Bei einer Auswahl eines Graphikschaltelements wird eine ihm zugeordnete Funktion ausgeführt. Die Funktion kann zu einer Veränderung der Informationsanzeige führen. Ferner können über die Graphikschaltelemente Einrichtungen gesteuert werden, deren Bedienung von der Informationsanzeige unterstützt wird, im erfindungsgemäßen Fall die Klimatisierungsvorrichtung des Fahrzeugs. Die Graphikschaltelemente können somit herkömmliche mechanische Schalter ersetzen. Die Bedienung der Graphikschaltelemente kann mittels verschiedener Eingabevorrichtungen erfolgen, etwa mittels einer berührungsempfindlichen Oberfläche auf der Anzeigefläche, mittels eines Touchpad, einer Maus oder eines mechanischen Bedienelements. Ferner kann eine Bedienung mittels Gesten, insbesondere berührungsloser Gesten vor der Anzeigefläche erfolgen. Beispielsweise kann die Darstellung im Einstellmodus Graphikschaltelemente umfassen, welche die Darstellung der Querschnittsprojektion und des Luftstroms durch die Querschnittsebene überlagern.

Die Belüftungselemente können an verschiedenen Orten im Innenraum des Fahrzeugs angeordnet sein. Beispielsweise kann es sich um Luftauslässe der Klimatisierungsvorrichtung im Bereich des Armaturenbretts handeln, beispielsweise sogenannte Mannanströmer, die einen Luftstrom in den Bereich des Rumpfes und des Kopfes der Fahrzeuginsassen leiten. Die Belüftungselemente können ferner im Fußbereich, in den Türen, im Bereich der Mittelkonsole, im Fahrzeugfond und/oder im Bereich des Innenverdecks des Fahrzeugs angeordnet sein. Die Belüftungselemente können einzeln oder in Gruppen eingestellt werden, etwa in Bezug auf die Richtung, die Intensität und/oder die Temperatur des Luftstroms. Unter Belüftungselementen im Sinne der Erfindung können jedoch alle solchen Elemente der Klimatisierungsvorrichtung verstanden werden, die zu einer Veränderung der klimatischen Verhältnisse, insbesondere des Luftstroms, im Fahrzeug führen können und deren Einfluss auf das Klima im Fahrzeuginnenraum mittels einer erfindungsgemäßen Darstellung, insbesondere in Form einer Verteilung im Querschnitt des Fahrzeugs, darstellbar ist.

Bei einer Weiterbildung wird im Einstellmodus die Querschnittsprojektion senkrecht zur Längsachse des Fahrzeugs dargestellt und die Parameter der Klimatisierungsvorrichtung werden in der Ebene senkrecht zur Längsachse des Fahrzeugs dargestellt. Dadurch erfolgt eine für den Nutzer in vorteilhafter Weise schnell erfassbare und übersichtliche Darstellung, wie die Parameter im Innenraum verteilt sind. Insbesondere kann sich die Ebene etwa auf Höhe der Vordersitze befinden, sodass die dargestellte Verteilung in etwa der von einem dort sitzenden Nutzer wahrgenommenen Verteilung der Parameter entspricht.

Die Darstellung der zumindest einen auf einem Fahrzeugsitz sitzenden Person kann beispielsweise in Form der Silhouette der Sitze und/oder Personen im dargestellten Bereich gestaltet sein, etwa einer oder zweier auf den Vordersitzen sitzender Personen. Ferner kann die Darstellung so gestaltet sein, dass die Bereiche von Kopf, Nacken, Schultern, Rumpf und/oder Armen der dargestellten Personen erkennbar sind. Dies ermöglicht dem Nutzer vorteilhafterweise die leichtere Orientierung innerhalb der Querschnittsprojektion. Insbesondere kann der Nutzer erkennen, in welchem Bereich sich beispielsweise der Kopf eines Fahrgastes befindet und wie die Parameter der Klimatisierungsvorrichtung in diesem Bereich verteilt sind. Beispielsweise kann angezeigt werden, auf welche Bereiche des Fahrgastes ein Luftstrom im Fahrzeug gerichtet ist. Dies erlaubt eine besonders einfache und intuitive Einstellung der Klimatisierungsvorrichtung im Hinblick auf den Komfort der im Fahrzeug befindlichen Personen. Ferner kann die Darstellung der zumindest einen Person durch den Nutzer einstellbar sein, beispielsweise indem die Eingabe einer Körpergröße vorgesehen ist.

Bei einer Weiterbildung des Verfahrens wird als Parameter die Intensität und/oder die Richtung und/oder die Temperatur eines durch die Belüftungselemente erzeugten Luftstroms bestimmt. Bei der Darstellung der Parameter der Klimatisierungsvorrichtung in der Ebene wird die Intensität und/oder die Richtung und/oder die Temperatur des durch die Belüftungselemente erzeugten Luftstroms dargestellt, wobei Flächen mittels Farbe und/oder Helligkeit dargestellt werden. Der Nutzer kann so in vorteilhafter Weise im Einstellmodus erkennen, welche Eigenschaften der Luftstrom durch die dargestellte Querschnittsebene hat. Diese Darstellung kann beispielsweise durch Pfeile oder andere graphische Objekte erfolgen. Ferner kann die Darstellung statisch oder dynamisch erfolgen, etwa durch die Darstellung sich bewegender graphischer Objekte, durch die eine Bewegung im Luftstrom dargestellt wird. Beispielsweise kann die Länge, Breite und/oder Färbung eines Pfeilsymbols Informationen über die Intensität, die Richtung und/oder die Temperatur eines von den Belüftungselementen erzeugten Luftstroms darstellen. Ferner kann etwa der von Luft durchströmte Bereich im Innenraum von der Umgebung graphisch abgesetzt dargestellt werden, etwa durch seine Farbe und/oder Helligkeit.

Zum Beispiel kann der Luftstrom im Bereich der Vordersitze oder im Bereich der Rücksitze dargestellt werden. Die Verteilung des Luftstroms kann dabei auf verschiedene Weisen bestimmt werden. Beispielsweise kann die Konfiguration der Belüftungselemente, etwa deren Richtung, Drehzahl und/oder Solltemperatur dazu dienen, den Luftstrom durch eine Ebene im Fahrzeug zu bestimmen. Ferner können Sensoren im Fahrzeug den Luftstrom messen. Die Darstellung der Verteilung des Luftstroms in der dargestellten Ebene kann mittels verschiedener graphischer Elemente und/oder graphischer Eigenschaften erfolgen. Beispielsweise können entsprechend dem Luftstrom an einzelnen Punkten der dargestellten Querschnittsebene Pfeilsymbole dargestellt werden.

Ferner können graphische Objekte die Darstellung überlagern, wobei die Größe, Farbe und/oder Helligkeit der einzelnen graphischen Objekte etwa die Intensität und/oder die Temperatur des die dargestellte Ebene durchströmenden Luftstroms darstellen. Diese können entsprechend einer gedachten Gitterstruktur auf der dargestellten Fläche angeordnet sein und durch ihre Auswahl kann der Luftstrom durch den entsprechenden Bereich der Querschnittsebene eingestellt werden. Beispielsweise können in der graphischen Darstellung punktartige graphische Objekte die Querschnittsebene überlagern, wobei die Größe und/oder Helligkeit der graphischen punktartigen Objekte die Intensität und/oder Temperatur des Luftstroms darstellen.

Bei einer weiteren Ausgestaltung wird durch den Steuerbefehl für die Klimatisierungsvorrichtung die Intensität und/oder die Richtung und/oder die Temperatur eines durch die Belüftungselemente erzeugten Luftstroms eingestellt. Dadurch kann vorteilhafterweise die Klimatisierung des Fahrzeugs durch die Klimatisierungsvorrichtung gesteuert werden. Insbesondere kann der Steuerbefehl zu einer Schwenkbewegung bei einzelnen oder mehreren Belüftungselementen führen. Ferner kann beispielsweise die Drehzahl von Ventilatoren und/oder die Drosselung des Luftstroms bei einzelnen oder mehreren Ausströmern verändert werden. Ferner kann etwa die Solltemperatur des Luftstroms gesteuert werden.

Die genannten Parameter können zusammen oder getrennt voneinander gesteuert werden.

Beispielsweise kann durch das Auswählen eines Graphikschaltelements der Luftstrom zu dem Ort hin geleitet werden, welcher der Position des in der Darstellung ausgewählten Graphikschaltelements entspricht. Umgekehrt kann durch die Auswahl eines Graphikschaltelements der Luftstrom im entsprechenden Bereich verringert werden oder es kann die Temperatur des Luftstroms angepasst werden. Ferner kann die Auswahl eines Graphiksteuerelements dazu führen, dass der von einem Belüftungselement erzeugte Luftstrom auf den entsprechenden Bereich im Innenraum des Fahrzeugs gelenkt wird, während gleichzeitig die Intensität des Luftstroms erhöht und die Temperatur gesenkt wird. Sind mehrere Bedienhandlungen definiert, kann also ein Graphiksteuerelement nicht lediglich ausgewählt werden, sondern es können verschiedene Bedienhandlungen mit verschiedenen Parametern des Luftstroms im Zusammenhang stehen. Beispielsweise können dazu verschiedene Bedienvorrichtungen vorhanden sein, es können verschiedene Gesten einer Gestensteuerung definiert sein oder die zeitliche Länge einer Berührung auf einem Touchscreen kann erfasst werden, um Eingaben in Bezug auf verschiedene Parameter der Klimatisierungsvorrichtung zu unterscheiden.

Bei einer Weiterbildung werden im Statusmodus der Innenraum und die Parameter der Klimatisierungsvorrichtung im Innenraum dreidimensional perspektivisch dargestellt. Die Anzeige ermöglicht dadurch vorteilhafterweise eine schnelle Orientierung und eine einfache Erfassung des derzeitigen Status der Klimatisierungsvorrichtung. Beispielsweise kann der Innenraum aus der Perspektive eines hinten oben befindlichen Punkts dargestellt werden, wobei die Position auch seitlich zur Längsachse des Fahrzeugs verschwenkt sein kann. Die Perspektive ist insbesondere so gewählt, dass die Darstellung den durch die Belüftungselemente erzeugten Luftstrom in allen Bereiche umfasst, in denen sich die Fahrzeuginsassen befinden. Es kann dabei der gesamte Innenraum des Fahrzeugs, insbesondere der gesamte Bereich der Fahrgastzelle dargestellt werden. Ferner kann die Darstellung den vorderen Bereich des Innenraums umfassen, in dem sich der Fahrer und der Beifahrer befinden. Zusätzlich oder alternativ kann die Darstellung den Fond des Fahrzeugs umfassen.
Die im Statusmodus angezeigte graphische Darstellung kann durch den Benutzer konfigurierbar sein. Insbesondere kann die Möglichkeit vorgesehen sein, zwischen drei- und zweidimensionaler Ansicht zu wechseln. Ferner kann die Auswahl zwischen verschieden stark detaillierten Darstellungen vorgesehen sein.

In einer weiteren Ausgestaltung wird der Innenraum im Statusmodus mittels graphischer Symbole vereinfacht so dargestellt, dass die von der Klimatisierung betroffenen Bereiche insbesondere der Fahrzeugsitze und/oder der Personen im Fahrzeug dargestellt werden. Beispielsweise kann ein schematischer Querschnitt in Längsrichtung dargestellt werden.

Bei einer weiteren Ausgestaltung werden im Statusmodus der Innenraum und die Parameter der Klimatisierungsvorrichtung im Innenraum aus einer Richtung dargestellt, die in einem spitzen Winkel zur Längsachse des Fahrzeugs in Richtung der Front des Fahrzeugs verläuft. Eine solche Darstellung zeigt vorteilhafterweise den Innenraum und die Parameter im Innenraum auf übersichtliche Weise und aus einer Perspektive, die derjenigen der Fahrzeuginsassen etwa entspricht. Beispielsweise kann eine Darstellung aus einer Perspektive hinten oberhalb der Vordersitze erfolgen, wobei der Bereich der Vordersitze mit Blick in Fahrtrichtung dargestellt wird. Insbesondere entspricht dies dem Blick auf das Armaturenbrett, in dem typischerweise einzelne Belüftungselemente, sogenannte Mannanströmer, integriert sind.

In einer weiteren Ausbildung kann etwa ein Längsschnitt durch die Fahrgastzelle oder den vorderen Bereich der Fahrgastzelle dargestellt werden. Es können auch schematische Darstellungen der einzelnen Sitze und/oder Fahrzeuginsassen angezeigt werden.

Die erfindungsgemäße Bedienvorrichtung zum Einstellen einer Klimatisierungsvorrichtung eines Fahrzeugs umfasst Belüftungselemente, durch die Parameter der Klimatisierungsvorrichtung erzeugbar sind. Sie umfasst ferner eine Klimaerfassungsvorrichtung, durch welche die Parameter der Klimatisierungsvorrichtung bestimmbar sind, sowie eine Bedienvorrichtung durch die eine Bedienabsicht eines Nutzers erfassbar ist. Dabei ist, wenn eine Bedienabsicht eines Nutzers erfasst wird, als Anzeigemodus ein Einstellmodus der Klimatisierungsvorrichtung aktivierbar und, wenn keine Bedienabsicht erfasst wird, als Anzeigemodus ein Statusmodus der Klimatisierungsvorrichtung aktivierbar. Die Bedienvorrichtung umfasst ferner eine Steuervorrichtung, durch die in Abhängigkeit vom aktivierten Status Graphikdaten einer graphischen Darstellung des Innenraums des Fahrzeugs und/oder der Parameter der Klimatisierungsvorrichtung erzeugbar und mittels einer Anzeigefläche anzeigbar sind. Dabei sind im Statusmodus der Innenraum des Fahrzeugs und die Parameter der Klimatisierungsvorrichtung im Fahrzeug darstellbar. Im Einstellmodus ist eine Querschnittsprojektion des Innenraums darstellbar und die Parameter der Klimatisierungsvorrichtung in einer Ebene der Querschnittsprojektion sind darstellbar, wobei die Darstellung bedienbare Graphikschaltelemente umfasst. Die Darstellung der Querschnittsprojektion des Innenraums im Einstellmodus umfasst zumindest eine auf einem Fahrzeugsitz sitzende Person. Die Perspektive der Darstellung ist dabei in Richtung der Fahrzeuglängsachse ausgerichtet. Die Bedienvorrichtung umfasst ferner eine Eingabevorrichtung, durch die eine Eingabe des Benutzers auf oder vor der Anzeigefläche in Bezug auf die bedienbaren Graphikelemente erfassbar ist, wobei durch die Steuereinheit in Abhängigkeit von der Eingabe ein Steuerbefehl für die Klimatisierungsvorrichtung des Fahrzeugs erzeugbar ist.

Die erfindungsgemäße Bedienvorrichtung ist dazu geeignet, das vorstehend beschriebene erfindungsgemäße Verfahren auszuführen. Sie weist somit dieselben Vorteile wie dieses Verfahren auf.

Bei einer Weiterbildung wird die Bedienabsicht des Nutzers durch eine von der Bedienvorrichtung umfasste Annäherungserfassungsvorrichtung als Annäherung eines Betätigungsobjekts an die Anzeigefläche durch einen Eintritt des Betätigungsobjekts in einen Detektionsbereich vor der Anzeigefläche erfasst.

In Abhängigkeit von dem Erfassen des Eintritts des Betätigungsobjekts, wie beispielsweise der Hand oder der Fingerspitze eines Nutzers, in den Detektionsbereich kann die Bedienabsicht des Nutzers erfasst werden und der Anzeigemodus gewechselt werden. Es kann insbesondere der Einstellmodus aktiviert werden, wenn eine Bedienabsicht erfasst wird, und der Statusmodus, wenn keine Bedienabsicht erfasst wird. Dabei wird die Bedienabsicht in vorteilhafter Weise dadurch erfasst, dass eine Annäherung des Nutzers etwa an eine Bedieneinrichtung erfasst wird.

Die Annäherungserfassungsvorrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungsobjekt gestreuten und/oder reflektierten Anteils der Detektionsstrahlung
umfassen. Sie kann insbesondere so ausgebildet sein, das Betätigungsobjekt in dem Detektionsbereich anhand der Intensität der empfangenen Detektionsstrahlung zu erkennen. Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Des Weiteren kann eine Modulationsvorrichtung zum Modulieren der emittierten Detektionsstrahlung vorgesehen sein, sodass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Die Annäherungserfassungsvorrichtung kann alternativ oder zusätzlich eine Kamera umfassen, die ein Betätigungsobjekt in einem bestimmten Detektionsbereich vor der Anzeigefläche erfasst und eine Annäherung an die Anzeigefläche erfasst.

In einer Weiterbildung umfasst die Eingabevorrichtung eine berührungsempfindliche Oberfläche auf der Anzeigefläche. Es wird somit ein sogenannter Touchscreen bereitgestellt, auf dem der Nutzer in vorteilhafter Weise schnell und einfach Informationen erfassen und Eingaben vornehmen kann.

Beispielsweise kann eine Folie über der Anzeigefläche angeordnet sein, mit welcher die Position einer Berührung eines Betätigungsobjekts detektiert werden kann. Bei dem Betätigungsobjekt handelt es sich insbesondere um die Fingerspitze eines Nutzers. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von der Fingerspitze eines Nutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position erfasst und einem auf der Anzeigefläche angezeigten graphischen Objekt zugeordnet werden. Des Weiteren kann die Länge der Berührung bei einer bestimmten Position oder innerhalb eines bestimmten Bereichs erfasst werden.

Bei einer Weiterbildung ist die Anzeigefläche bei der Mittelkonsole des Fahrzeugs angeordnet. Die Darstellung wird dadurch vorteilhafterweise an zentraler, gut einsehbarer Stelle im Fahrzeug ausgegeben, sodass der Fahrer und andere Fahrzeuginsassen einen einfachen und schnellen Zugang zu den Darstellungen im Statusmodus und im Einstellmodus haben. Im Bereich der Mittelkonsole steht bei vielen modernen Fahrzeugen ein Touchscreen bereits zur Verfügung. Die erfindungsgemäße Bedienvorrichtung kann daher einfach und kostengünstig in bereits bestehende Fahrzeuge integriert werden.

Bei einer Ausbildung ist durch die Belüftungselemente ein Luftstrom erzeugbar und es ist mittels der Klimaerfassungsvorrichtung die Intensität und/oder die Richtung und/oder die Temperatur des erzeugten Luftstroms bestimmbar. Dadurch werden vorteilhafterweise Daten über zentrale Parameter der Klimatisierungsvorrichtung bestimmt und stehen zur Darstellung für den Nutzer zur Verfügung. Die Belüftung des Fahrzeuginnenraums und der damit verbundene Luftstrom sind wesentliche Elemente der gesamten Klimatisierung des Fahrzeugs und dem Nutzer soll daher eine möglichst gut erfassbare Übersicht über den Luftstrom im Fahrzeug ermöglicht werden.

Bei einer Weiterbildung ist durch die Belüftungselemente ein Luftstrom erzeugbar und durch den Steuerbefehl der Steuereinheit sind die Belüftungselemente in Bezug auf die Intensität und/oder die Richtung und/oder die Temperatur des erzeugten Luftstroms einstellbar. Der Benutzer kann dadurch vorteilhafterweise die Eigenschaften der Klimatisierung des Fahrzeugs durch die Belüftungselemente steuern. Insbesondere können einzelne oder mehrere der genannten Parameter mittels geeigneter Bedienhandlungen angepasst werden.

Bei einer Ausbildung der Erfindung sind durch die Eingabevorrichtung Gesten des Benutzers in einem Erfassungsraum vor der Anzeigefläche als Eingabe erfassbar. Der Nutzer kann die Eingabe damit in vorteilhafter Weise schnell und einfach vornehmen.

Zur Durchführung einer Geste wird erfindungsgemäß ein Betätigungsobjekt verwendet, insbesondere die Hand des Nutzers. In den folgenden Erläuterungen ist die Hand des Benutzers das Betätigungsobjekt, die Angaben sind allerdings auf andere Betätigungsobjekte, etwa einen Stift, zu verallgemeinern.

Unter einer "Geste" wird im Sinne der Erfindung eine bestimmte Stellung der Hand eines Nutzers oder eine bestimmte Bewegung, die mit der Hand des Nutzers ausgeführt wird, verstanden. Die Gesten können nach an sich bekannter Art ausgestaltet sein. Sie umfassen insbesondere Zeigegesten, Wischgesten und solche Gesten, die im alltäglichen Gebrauch verwendet werden, z.B. Handdrehungen, Greifgesten und Kombinationen mehrerer solcher ggf. unmittelbar kurz nacheinander ausgeführter Gesten. Die Gesten werden im Detektionsraum ausgeführt, ohne dass der Nutzer einen räumlichen Bezug zum Anzeigebereich herstellen muss. Es ist insbesondere nicht erforderlich, sich einem bestimmten graphischen Objekt im Anzeigebereich zu nähern. Durch die Steuerung der Nutzerschnittstelle mittels Gesten wird dem Nutzer vorteilhafterweise eine besonders einfache und intuitive Eingabemöglichkeit bereitgestellt.

Gemäß einer Ausgestaltung der erfindungsgemäßen Bedienvorrichtung umfasst die Geste eine von der Hand eines Nutzers ausgeführte Bewegung. Die Bewegungsrichtung der Geste steht insbesondere in Verbindung mit einer Bewegungsrichtung oder einer Funktion, die der Geste zugeordnet ist. Beispielsweise kann durch eine Geste ein Graphikschaltelement auf der Anzeigefläche ausgewählt werden, etwa das räumlich am nächsten liegende Graphikschaltelement. Mittels einer weiteren Geste kann dann eine weitere Funktion ausgeführt werden, beispielsweise kann eine seitliche Bewegung den Luftstrom vom ursprünglichen Ort weg bewegen oder eine Drehbewegung der Hand kann etwa die Intensität und/oder die Temperatur des Luftstroms im zugeordneten Bereich des Fahrzeuginnenraums anpassen.

Dabei kann ein Graphikschaltelement durch eine Geste ausgewählt und bedient werden, die einem Schieben oder Drehen einer mechanischen Bedieneinrichtung entspricht, wobei die entsprechende Bewegung berührungslos im Erfassungsraum vom Nutzer ausgeführt wird. Eine derartige Betätigung eines Bedienobjekts, welches auf der Anzeigefläche angezeigt wird, bietet den Vorteil, dass der Nutzer nicht - wie beispielsweise bei einer berührungsempfindlichen Oberfläche - einen bestimmten Flächenbereich treffen muss. Es reicht vielmehr aus, dass er seine Hand in den Erfassungsraum bewegt und dort die dem Bedienobjekt zugeordnete Geste ausführt. Die Geste entspricht dabei insbesondere einer Bewegung, wie sie beispielsweise bei mechanischen Bedienelementen ausgeführt würde, sodass sich der Nutzer diese Gesten sehr leicht merken kann.

Gemäß einer weiteren Ausgestaltung wird aus der erfassten Geste eine Richtung im Raum ermittelt, in Abhängigkeit von der ermittelten Richtung wird ein Punkt auf der Anzeigefläche berechnet und die Auswahl des Graphikschaltelements wird visualisiert, wenn das Graphikschaltelements in einem vorbestimmten Umgebungsbereich um den berechneten Punkt liegt. Hierdurch kann das Graphikschaltelements etwa durch Zeigen ausgewählt werden. Die Visualisierung des anvisierten Graphikschaltelements hat den Vorteil, dass der Nutzer unmittelbar eine Rückmeldung zu seiner Bedienaktion erhält.

Insbesondere werden die Gesten berührungslos im Raum erfasst. Für den Fall, dass die Geste in mehrere Phasen unterteilt ist, wird wenigstens eine Phase berührungslos im Raum erfasst. Berührungslose Gesten haben insbesondere den Vorteil, dass der Nutzer für seine Bedieneingaben keine Bedienmittel in die Hand nehmen muss. Dies ist insbesondere vorteilhaft bei der Verwendung des erfindungsgemäßen Verfahrens in einem Fahrzeug.

Die Erfassung der Gesten kann berührungslos durch ein Kamerasystem erfolgen, welches zeitlich aufgelöste Videodaten aus dem Detektionsraum aufnimmt und mittels einer angeschlossenen Analyseeinheit die erfassten Nutzerbewegungen bestimmten Gesten zuordnet. Alternativ oder auch zusätzlich umfasst die Gestenerfassungseinrichtung resistive und/oder kapazitive Flächen, über welche eine erste Phase einer Geste erfassbar ist.

Bei einer weiteren Ausbildung sind einzelne oder mehrere Belüftungselemente deaktivierbar. Den deaktivierten Belüftungselementen zugeordnete Bereiche im Innenraum werden in der graphischen Darstellung im Statusmodus und/oder im Einstellmodus mit veränderter Helligkeit und/oder veränderter Farbe gegenüber anderen Bereichen dargestellt. Der Benutzer erkennt dadurch vorteilhafterweise schnell und einfach, welche Bereiche des Fahrzeugs derzeit von einem Luftstrom durchströmt werden, der von den einstellbaren Belüftungselementen erzeugt wird. Ferner werden im Einstellmodus diejenigen Bereiche ersichtlich, in denen keine Steuerung der Belüftung mittels der Belüftungselemente möglich ist.

Das erfindungsgemäße Fahrzeug umfasst eine erfindungsgemäße Bedienvorrichtung. Es weist somit dieselben Vorteile wie diese Bedienvorrichtung auf.

Die Erfindung wird nun anhand von Ausführungsbeispielen mit Bezug zu den Zeichnungen erläutert.
- Figur 1: zeigt ein Ausführungsbeispiel der erfindungsgemäßen Bedienvorrichtung in einem Fahrzeug,
- Figur 2: zeigt ein Beispiel einer nach dem erfindungsgemäßen Verfahren erzeugten Anzeige im Statusmodus,
- Figur 3: zeigt ein weiteres Beispiel einer nach dem erfindungsgemäßen Verfahren erzeugten Anzeige im Statusmodus und
- Figur 4: zeigt ein Beispiel einer nach dem erfindungsgemäßen Verfahren erzeugten Anzeige im Einstellmodus.

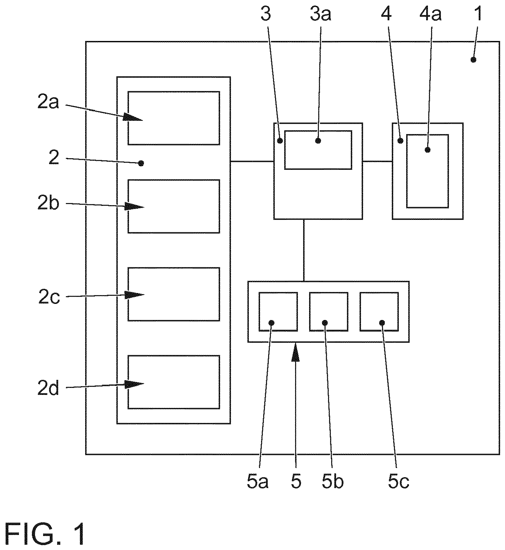

Mit Bezug zu Figur 1 wird ein Ausführungsbeispiel der erfindungsgemäßen Bedienvorrichtung in einem Fahrzeug erläutert.

Ein Fahrzeug 1 umfasst eine Klimatisierungsvorrichtung 2 mit einer Vielzahl von Belüftungselementen. Im dargestellten Fall sind vereinfacht vier Belüftungselemente 2a bis 2d umfasst. Es handelt es sich um die Mannanströmer 2a bis 2d, durch die ein gerichteter Luftstrom insbesondere auf den Rumpf- und Kopfbereich der Fahrzeuginsassen gelenkt wird. Die Klimatisierungsvorrichtung 2 ist mit einer Steuervorrichtung 3 gekoppelt, die eine Klimaerfassungsvorrichtung 3a umfasst. Die Klimaerfassungsvorrichtung 3a bestimmt die Verteilung des Luftstroms im Innenraum des Fahrzeugs 1, indem sie anhand der Konfiguration der Mannanströmer 2a bis 2d den Luftstrom, seine Eigenschaften und seine Verteilung im Fahrzeug (1) berechnet. Insbesondere werden die Intensität und Richtung des Luftstroms, sowie die dabei erzeugte Verteilung der Temperatur im Fahrzeug 1 bestimmt.

Ferner sind mit der Steuervorrichtung 3 eine Anzeigevorrichtung 4 mit einer Anzeigefläche 4a und eine Bedienvorrichtung 5 gekoppelt. Die Bedienvorrichtung 5 umfasst eine Eingabevorrichtung 5a, eine Annäherungserfassungsvorrichtung 5b und eine Gestenerfassungsvorrichtung 5c.

Durch die Annäherungserfassungsvorrichtung 5b wird erfasst, ob der Nutzer sich an die Eingabevorrichtung 5a annähert. Ist dies der Fall, wird dies als Bedienabsicht des Nutzers gewertet. In Abhängigkeit von dem aktuell aktiven Anzeigemodus erzeugt die Steuervorrichtung 3 Graphikdaten einer graphischen Darstellung des Innenraums des Fahrzeugs 1 und überträgt diese an die Anzeigevorrichtung 4, wo sie auf der Anzeigefläche 4a angezeigt werden, wie es mit Bezug zu dem erfindungsgemäßen Verfahren erläutert wird.

Die Bedienvorrichtung 5, insbesondere die Eingabevorrichtung 5a, erfasst Eingaben des Nutzers und überträgt diese an die Steuervorrichtung 3. Anhand der Eingaben des Nutzers erzeugt die Steuervorrichtung 3 einen Steuerbefehl und überträgt diesen an die Klimatisierungsvorrichtung 2, deren Konfiguration dadurch angepasst wird.

Mit Bezug zu Figur 1 wird ein Ausführungsbeispiel des erfindungsgemäßen Verfahrens erläutert.

Durch die Belüftungselemente 2a bis 2d strömt Luft in den Innenraum des Fahrzeugs 1. Durch eine geeignete Konfiguration der Klimatisierungsvorrichtung 2 sind die Richtung, die Intensität und die Temperatur der einströmenden Luft einstellbar. Die Einstellung erfolgt durch Steuerbefehle von der Steuervorrichtung 3. Die Klimaerfassungsvorrichtung 3a, die von der Steuervorrichtung 3 umfasst ist, bestimmt die Verteilung des Luftstroms im Fahrzeug 1, wobei die Konfiguration der einzelnen Belüftungselemente 2a bis 2d berücksichtigt wird.

Die Annäherungserfassungsvorrichtung 5b erfasst eine Bedienabsicht eines Nutzers, indem sie die Annäherung der Hand des Benutzers an die Anzeigefläche 4a erfasst. Eine Bedienabsicht gilt dann als gegeben, wenn sich der Benutzer mit der Hand an die Anzeigefläche 4a annähert. In diesem Fall wird als Anzeigemodus der Einstellmodus aktiviert. Liegt keine Bedienabsicht des Benutzers vor, so wird der Statusmodus aktiviert. Die Steuervorrichtung 3 erzeugt in Abhängigkeit von dem Anzeigemodus Grafikdaten einer graphischen Darstellung des Innenraums des Fahrzeugs 1 und der Verteilung des Luftstroms im Innenraum. Die Graphikdaten werden an die Anzeigevorrichtung 4 übertragen und auf der Anzeigefläche 4a angezeigt. Im Statusmodus wird die graphische Darstellung dabei so erzeugt, dass der Innenraum des Fahrzeugs 1 mit dem durch die Belüftungselemente 2a bis 2d erzeugten Luftstrom dargestellt wird.

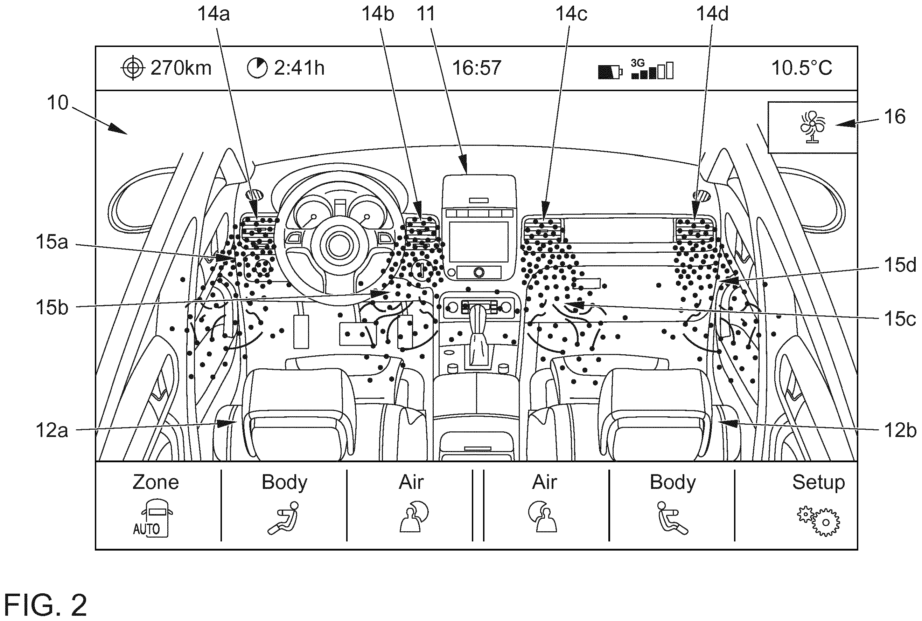

Im dargestellten Fall erfolgt diese Darstellung dreidimensional perspektivisch. Details zu der Darstellung sind unten mit Bezug zu den Figuren 2 bis 4 ausgeführt. Dabei wird der Innenraum aus der Perspektive eines hinten oberhalb der Vordersitze befindlichen Punktes dargestellt. Die Darstellung umfasst also insbesondere den vorderen Bereich des Innenraums.

Beim Aktivieren des Einstellmodus wechselt die Darstellung zu einer Querschnittsprojektion des Innenraums, die im vorliegenden Fall etwa der Perspektive eines Punktes zwischen den Vordersitzen entspricht. Ferner wird der Luftstrom durch die Ebene dieser Querschnittsprojektion dargestellt. Dieses Ebene ist im vorliegenden Fall senkrecht zur Längsachse des Fahrzeugs 1 ausgerichtet.

In dem gezeigten Beispiel erfolgt die Anzeige auf einem Touchscreen, d.h. die Eingabevorrichtung 5a umfasst eine berührungsempfindliche Oberfläche auf der Anzeigefläche 4a. Der Nutzer kann die Verteilung des Luftstroms einstellen, indem er den Touchscreen dort berührt, wo ein Punkt der graphischen Darstellung einen räumlichen Bereich im Fahrzeug 1 repräsentiert. Anhand dieser Eingabe erzeugt die Steuervorrichtung 3 einen Steuerbefehl, der an die Klimatisierungsvorrichtung 2 übertragen wird. Entsprechend dem Steuerbefehl werden die Belüftungselemente 2a bis 2d so konfiguriert, dass die gewünschte Verteilung des Luftstroms erreicht wird. Verlässt die Hand des Benutzers den Erfassungsbereich der Annäherungserfassungsvorrichtung 5b, so wird der Statusmodus aktiviert und die entsprechende Darstellung erzeugt.

In einer weiteren Ausführung wird die Eingabe des Benutzers durch die Gestenerfassungsvorrichtung 5c erfasst. Dabei bewegt der Benutzer etwa seine Hand vor der Anzeigefläche 4a zu einer Position, die einen bestimmten räumlichen Bereich repräsentiert, und führt dort eine Zeigegeste aus. Die Position auf der Anzeigefläche 4a, die der Zeigegeste entspricht, wird bestimmt und die Belüftungselemente 2a bis 2d werden so eingestellt, dass der auf diese Weise ausgewählte Bereich von Luft durchströmt wird.

Mit Bezug zu Figur 2 wird ein Beispiel einer nach dem erfindungsgemäßen Verfahren erzeugten Anzeige im Statusmodus erläutert. Die dargestellte Anzeige wurde durch das oben mit Bezug zu Figur 1 dargestellte Ausführungsbeispiel der erfindungsgemäßen Bedienvorrichtung erzeugt. Da die Annäherungserfassungsvorrichtung 5b keine Bedienabsicht des Nutzers erfasst, ist als Anzeigemodus der Statusmodus aktiviert.

Es wird eine dreidimensional perspektivische Darstellung des Innenraums 10 des Fahrzeugs 1 dargestellt. Die Perspektive geht von einem Punkt hinten oberhalb der Vordersitze aus. Dementsprechend sind der linke 12a und der rechte Vordersitz 12b dargestellt. Ferner ist das Armaturenbrett 11 dargestellt. Die vier Mannanströmer 2a bis 2d des Fahrzeugs 1 werden als graphische Abbilder der Mannanströmer 14a bis 14d dargestellt. Das Belüftungssymbol 16 zeigt an, dass die Anzeige die Konfiguration der Belüftung betrifft.

Der durch die Mannanströmer 2a bis 2d im Fahrzeug 1 erzeugte Luftstrom wird als graphisch hervorgehobene Bereiche 15a bis 15d, ausgehend von den Darstellungen der Mannanströmer 14a bis 14d, dargestellt, wobei graphische bewegliche Objekte innerhalb der graphisch hervorgehobenen Bereiche 15a bis 15d die Bewegung der strömenden Luft darstellen. Die Hervorhebung des Luftstroms in den graphisch hervorgehobenen Bereichen 15a bis 15d kann durch eine gegenüber dem Hintergrund andere Farbe, eine andere Helligkeit und/oder ein Muster erfolgen, wobei die Darstellung statisch oder dynamisch erfolgen kann.

Der Nutzer entnimmt der im Statusmodus dargestellten Anzeige eine Übersicht darüber, wie der Luftstrom, repräsentiert von den graphisch hervorgehobenen Bereichen 15a bis 15d, im Innenraum 10 des Fahrzeugs 1 verteilt ist. Er erhält ferner Informationen über die Intensität des Luftstroms sowie die Richtungen der strömenden Luft. Dabei kann auch die Temperatur, etwa durch die Wahl verschiedener Farben der Darstellung der graphisch hervorgehobenen Bereiche 15 bis 15d, verdeutlicht werden.

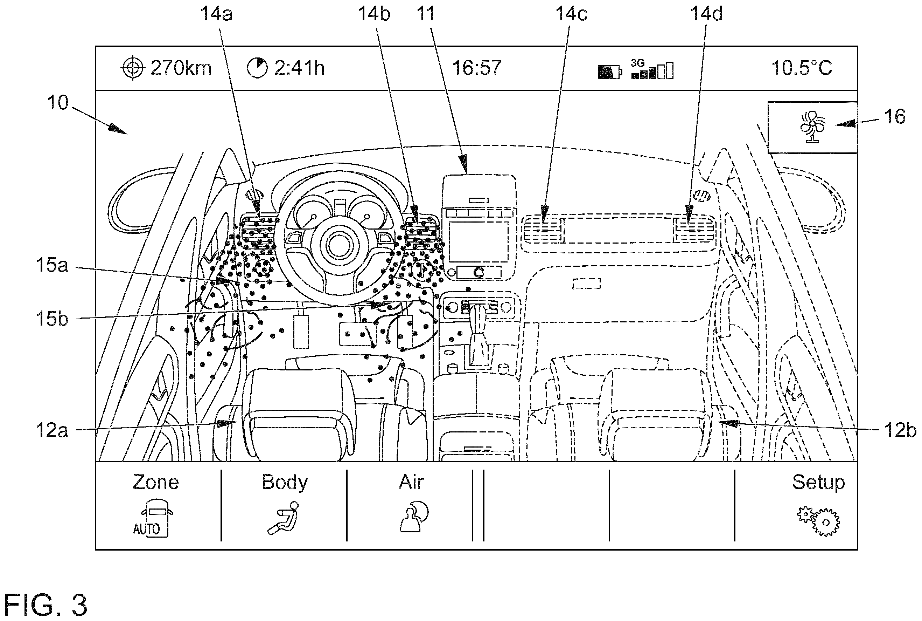

Mit Bezug zu Figur 3 wird ein weiteres Beispiel einer nach dem erfindungsgemäßen Verfahren erzeugten Anzeige im Statusmodus dargestellt.

Die in der Figur 3 dargestellte Anzeige des Innenraums 10 des Fahrzeugs 1 wurde im Wesentlichen unter den gleichen Voraussetzungen generiert wie die in Figur 2 dargestellte Anzeige. Im Unterschied zu der in Figur 2 dargestellten Situation sind allerdings bei der in Figur 3 dargestellten Anzeige die Mannanströmer 14c und 14d nicht aktiv. Um dies zu verdeutlichen, ist in der in Figur 3 dargestellten Anzeige der rechte Bereich des Innenraums 10 des Fahrzeugs 1 abgedunkelt gegenüber dem linken Bereich dargestellt. Dem Benutzer wird dadurch schnell und einfach verdeutlicht, dass die Belüftung auf der rechten Seite nicht aktiv ist.

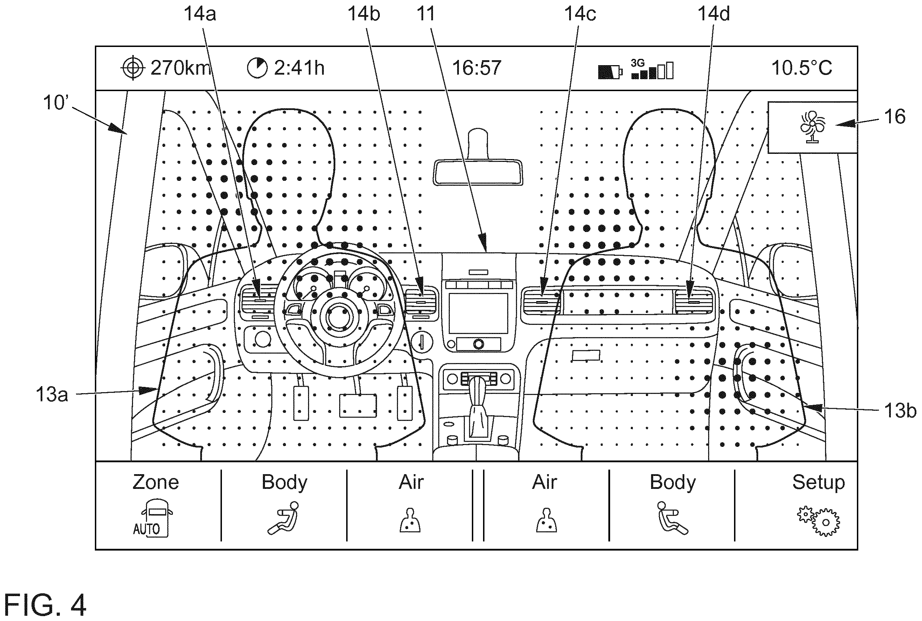

Mit Bezug zu den Figuren 1 und 4 wird ein Beispiel einer nach dem erfindungsgemäßen Verfahren erzeugten Anzeige im Einstellmodus erläutert. Die dargestellte Anzeige wurde, wie bereits die in den Figuren 2 und 3 dargestellten Anzeigen, in einem Ausführungsbeispiel der erfindungsgemäßen Bedienvorrichtung erzeugt. Im Unterschied zu den vorstehend beschriebenen Anzeigen wurde jedoch durch die Annäherungserfassungsvorrichtung 5b eine Bedienabsicht des Nutzers erfasst. Dementsprechend ist als Anzeigemodus der Einstellmodus aktiviert.

Die Perspektive, aus welcher der Innenraum 10 des Fahrzeugs 1 dargestellt wird, ist so geschwenkt, dass eine Querschnittsprojektion 10' dargestellt wird. Diese umfasst wiederum den Blick auf das Armaturenbrett 11 mit Darstellungen der vier Mannanströmer 14a bis 14d. Die Perspektive geht von einem Punkt etwa zwischen den Vordersitzen des Fahrzeugs 1 aus und ist parallel zur Längsachse des Fahrzeugs in Richtung der Front des Fahrzeugs gerichtet. Vom Innenraum 10 des Fahrzeugs 1 wird somit eine Darstellung erzeugt, die einem direkten, nicht gegenüber der Längsachse geschwenkten Blick in Richtung des Armaturenbretts entspricht. Dabei kann die Ansicht auf die für die Orientierung im Raum und die Konfiguration der Klimatisierungsvorrichtung 2 wesentlichen Elemente reduziert werden, beispielsweise kann die Darstellung der Mittelkonsole vereinfacht erfolgen.

Ferner umfasst die Darstellung eine linke 13a und rechte Personensilhouette 13b, welche die auf den Vordersitzen des Fahrzeugs 1 befindlichen Personen repräsentieren. Insbesondere sind Kopf-, Nacken-, Schulter- und Rumpfbereiche erkennbar. Ferner kann die Position der Oberarme der dargestellten Personen 13a und 13b aus der Darstellung abgeschätzt werden. Das Belüftungssymbol 16 zeigt weiterhin an, dass die Konfiguration der Belüftung im Fahrzeug 1 dargestellt wird.

Im Gegensatz zu den in den Figuren 2 und 3 dargestellten Anzeigen im Statusmodus wird die Verteilung der durch die Mannanströmer 14a bis 14d einströmende Luft durch Eigenschaften von graphischen Objekten dargestellt, welche die dargestellte Querschnittsprojektion 10' überlagern. Im dargestellten Fall sind dies Punkte, die auf einem gedachten Gitter angeordnet sind. Das gedachte Gitter entspricht einer gedachten Ebene senkrecht zur Längsachse des Fahrzeugs an einer etwa den Vordersitzen entsprechenden Position. Die Größe, Helligkeit und/oder Farbe der dargestellten Punkte stellen Eigenschaften des diese Ebene durchströmenden Luftstroms dar. Insbesondere kann diese Darstellung statisch oder dynamisch erfolgen. Durch die Farbe, Helligkeit und Größe der dargestellten Objekte können die Intensität, die Richtung und/oder die Temperatur der einströmenden Luft dargestellt werden. Diese Parameter und ihre Verteilung im Fahrzeug 1 werden dabei durch die Klimaerfassungsvorrichtung 3a bestimmt.

Bei der in Figur 4 gezeigten Darstellung überlagert ein Netz von Punkten die Darstellung, durch die der Luftstrom durch eine Ebene etwa auf Höhe des Fahrers und des Beifahrers dargestellt wird. Dazu werden solche Punkte größer und heller dargestellt, die einen Bereich repräsentieren, der mit gegenüber der Umgebung höherer Intensität durchströmt wird. Insbesondere kann der Nutzer der Darstellung entnehmen, wo der Luftstrom mit welcher Intensität auf Personen trifft, die auf den Vordersitzen sitzen. Beispielsweise ist im dargestellten Fall erkennbar, dass der Luftstrom im linken Kopfbereich und an der rechten Schulter der linken Silhouette 13a auftrifft. Dagegen trifft der Luftstrom an der rechten Silhouette 13b im Bereich der linken Schulter und des rechten Teils des Rumpfes auf.

Die graphischen Objekte, die den Luftstrom verdeutlichen, sind hier im Einstellmodus auch bedienbare Graphikschaltelemente. Da die Darstellung auf dem Touchscreen 5a angezeigt wird, kann der Nutzer die Graphikschaltflächen direkt bedienen. Dazu berührt er mit der Spitze eines Fingers die Oberfläche des Touchscreens 5a an einer Stelle, die vom Luftstrom durchflossen werden soll. Beispielsweise kann im dargestellten Fall durch eine Berührung im Bereich des Rumpfes der links dargestellten Person 13a der Luftstrom vom Kopf- auf den Rumpfbereich gelenkt werden. Ferner kann durch eine Wischgeste auf der Oberfläche des Touchscreens 5a ein größerer Bereich zur Durchströmung mit Luft markiert werden. Beispielsweise kann so der gesamte untere Bereich des Rumpfes mit Luft durchströmt werden, während der Luftstrom vom Kopfbereich der linken Person 13a weggelenkt wird.

In einem weiteren Ausführungsbeispiel erfolgt die Eingabe nicht durch ein Touchscreen 5a, sondern durch ein Touchpad 5a. Analog zur Bedienung mit dem Touchscreen 5a wird auch hier bei Annäherung an das Touchpad 5a und/oder durch die Bedienung desselben als Anzeigemodus der Einstellmodus aktiviert. Durch Betätigen von Graphikschaltelementen durch das Touchpad 5a wird der Luftstrom zu den entsprechenden Bereichen gelenkt.

In einem weiteren Ausführungsbeispiel erfolgt die Bedienung mittels der Gestenerfassungsvorrichtung 5c, wobei der Nutzer eine berührungslose Geste im Raum vor der Anzeigefläche 4a durchführt. Die Bedienhandlung kann dabei etwa eine Auswahlgeste sein, beispielsweise eine Zeigegeste, wobei deren Wirkung der oben beschriebenen Wirkung der Berührung einer bestimmten Position auf dem Touchscreen 5a entspricht. Ferner kann beispielsweise eine Wischbewegung den Luftstrom zur durch das Wischen ausgezeichneten Richtung hin verschieben. Beispielsweise kann eine Wischbewegung nach links oberhalb der linken Hälfte der in Figur 4 gezeigten Darstellung die Verteilung des Luftstroms nach links verschieben.

Wird keine weitere Bedienabsicht des Nutzers detektiert, beispielsweise wenn die Annäherungserfassungsvorrichtung 5b kein Bedienobjekt im Detektionsraum erfasst, wird als Anzeigemodus wieder der Statusmodus aktiviert. Wurde im Einstellmodus eine Veränderung vorgenommen, so wird der resultierende Luftstrom und seine Verteilung im Innenraum 10 entsprechend geändert dargestellt.

### Bezugszeichenliste

- 1: Fahrzeug
- 2: Klimatisierungsvorrichtung
- 2a, 2b, 2c, 2d: Belüftungselemente; Mannanströmer
- 3: Steuervorrichtung
- 3a: Klimaerfassungsvorrichtung
- 4: Anzeigevorrichtung
- 4a: Anzeigefläche
- 5: Bedienvorrichtung
- 5a: Eingabevorrichtung; Touchscreen
- 5b: Annäherungserfassungsvorrichtung
- 5c: Gestenerfassungsvorrichtung
- 10: Innenraum des Fahrzeugs (in graphischer Anzeige)
- 10': Querschnittsprojektion
- 11: Armaturenbrett (in graphischer Anzeige)
- 12a, 12b: Sitze (in graphischer Anzeige)
- 13a, 13b: Silhouetten von Personen (in graphischer Anzeige)
- 14a - 14d: Mannanströmer (in graphischer Anzeige)
- 15a - 15d: Luftstrom (in graphischer Anzeige)
- 16: Belüftungssymbol (in graphischer Anzeige)

## Patentansprüche

1. Verfahren zum Einstellen einer Klimatisierungsvorrichtung (2) eines Fahrzeugs (1), mit den Schritten:
Bestimmen von durch Belüftungselemente (2a; 2b; 2c; 2d) erzeugten Parametern der Klimatisierungsvorrichtung (2);
Aktivieren eines Statusmodus der Klimatisierungsvorrichtung (2) als Anzeigemodus, wobei im Statusmodus Graphikdaten einer graphischen Darstellung eines Innenraums (10) des Fahrzeugs (1) derart erzeugt und angezeigt werden, dass der Innenraum (10) des Fahrzeugs (1) und die Parameter der Klimatisierungsvorrichtung (2) im Innenraum (10) dargestellt werden;
Erfassen einer Bedienabsicht eines Benutzers;
Aktivieren eines Einstellmodus der Klimatisierungsvorrichtung (2) als Anzeigemodus, wenn eine Bedienabsicht eines Nutzers erfasst wird, wobei im Einstellmodus Graphikdaten einer graphischen Darstellung des Innenraums (10) des Fahrzeugs (1) derart erzeugt und angezeigt werden, dass der Innenraum (10) des Fahrzeugs (1) und die Parameter der Klimatisierungsvorrichtung (2) im Innenraum (10) dargestellt werden, wobei die Darstellung bedienbare Graphikschaltelemente umfasst;
Erfassen einer Eingabe des Benutzers, die in Bezug auf die bedienbaren Graphikschaltelemente auf oder vor einer Anzeigefläche (4a) für die graphische Darstellung ausgeführt wird; und
Erzeugen eines Steuerbefehls für die Klimatisierungsvorrichtung (2) des Fahrzeugs (1) in Abhängigkeit davon, in Bezug zu welchem bedienbaren Graphikschaltelement die Eingabe ausgeführt wurde;
**dadurch gekennzeichnet, dass**
im Einstellmodus eine Querschnittsprojektion (10') des Innenraums (10) dargestellt wird und die Parameter der Klimatisierungsvorrichtung (2) in einer Ebene der Querschnittsprojektion (10') dargestellt werden; und
die Darstellung der Querschnittsprojektion des Innenraums (10') im Einstellmodus zumindest eine auf einem Fahrzeugsitz sitzende Person (13a; 13b) umfasst und die Perspektive der Darstellung in Richtung der Fahrzeuglängsachse ausgerichtet ist.

2. Verfahren nach Anspruch 1,
**dadurch gekennzeichnet, dass**
im Einstellmodus die Querschnittsprojektion (10') senkrecht zur Längsachse des Fahrzeugs (1) dargestellt wird und die Parameter der Klimatisierungsvorrichtung (2) in der Ebene senkrecht zur Längsachse des Fahrzeugs (1) dargestellt werden.

3. Verfahren nach einem der vorhergehenden Ansprüche,
**dadurch gekennzeichnet, dass**
als Parameter die Intensität und/oder die Richtung und/oder die Temperatur eines durch die Belüftungselemente (2a; 2b; 2c; 2d) erzeugten Luftstroms bestimmt wird und bei der Darstellung der Parameter der Klimatisierungsvorrichtung (2) in der Ebene die Intensität und/oder die Richtung und/oder die Temperatur des durch die Belüftungselemente (2a; 2b) erzeugten Luftstroms dargestellt wird, wobei Flächen mittels Farbe und/oder Helligkeit dargestellt werden, oder wobei Größe, Farbe und/oder Helligkeit einzelner graphischer Objekte die Intensität und/oder die Temperatur eines die dargestellte Ebene durchströmenden Luftstroms darstellen.

4. Verfahren nach einem der vorhergehenden Ansprüche,
**dadurch gekennzeichnet, dass**
durch den Steuerbefehl für die Klimatisierungsvorrichtung (2) die Intensität und/oder die Richtung und/oder die Temperatur eines durch die Belüftungselemente (2a; 2b; 2c; 2d) erzeugten Luftstroms eingestellt wird.

5. Verfahren nach einem der vorhergehenden Ansprüche,
**dadurch gekennzeichnet, dass**
im Statusmodus der Innenraum (10) und die Parameter der Klimatisierungsvorrichtung (2) im Innenraum (10) dreidimensional perspektivisch dargestellt werden.

6. Verfahren nach Anspruch 5,
**dadurch gekennzeichnet, dass**
im Statusmodus der Innenraum (10) und die Parameter der Klimatisierungsvorrichtung (2) im Innenraum (10) aus einer Richtung dargestellt werden, die in einem spitzen Winkel zur Längsachse des Fahrzeugs (1) in Richtung der Front des Fahrzeugs (1) verläuft.

7. Bedienvorrichtung zum Einstellen einer Klimatisierungsvorrichtung (2) eines Fahrzeugs (1), mit:
Belüftungselementen (2a; 2b; 2c; 2d), durch die Parameter der Klimatisierungsvorrichtung (2) erzeugbar sind;
einer Klimaerfassungsvorrichtung (3a), durch welche die Parameter der Klimatisierungsvorrichtung (2) bestimmbar sind;
einer Bedienvorrichtung (5), durch die eine Bedienabsicht eines Nutzers erfassbar ist, wobei, wenn eine Bedienabsicht eines Nutzers erfasst wird, als Anzeigemodus ein Einstellmodus der Klimatisierungsvorrichtung (2) aktivierbar ist und, wenn keine Bedienabsicht erfasst wird, als Anzeigemodus ein Statusmodus der Klimatisierungsvorrichtung (2) aktivierbar ist;
einer Steuervorrichtung (3), durch die in Abhängigkeit vom aktivierten Status Graphikdaten einer graphischen Darstellung des Innenraums (10) des Fahrzeugs (1) und/oder der Parameter der Klimatisierungsvorrichtung (2) erzeugbar und mittels einer Anzeigefläche (4a) anzeigbar sind, wobei, in einem Verfahren gemäß Anspruch 1,
im Statusmodus der Innenraum (10) des Fahrzeugs (1) und die Parameter der Klimatisierungsvorrichtung (2) im Innenraum (10) darstellbar sind und
im Einstellmodus der Innenraum (10) des Fahrzeugs (1) und die Parameter der Klimatisierungsvorrichtung (2) im Innenraum (10) darstellbar sind, wobei die Darstellung bedienbare Graphikschaltelemente umfasst; und
einer Eingabevorrichtung (5a), durch die eine Eingabe des Benutzers auf oder vor der Anzeigefläche (4a) in Bezug auf die bedienbaren Graphikelemente erfassbar ist, wobei
durch die Steuervorrichtung (3) in Abhängigkeit von der Eingabe ein Steuerbefehl für die Klimatisierungsvorrichtung (2) des Fahrzeugs (1) erzeugbar ist,
**dadurch gekennzeichnet, dass**
im Einstellmodus die graphische Darstellung eine Querschnittsprojektion (10') des Innenraums (10) ist und die Parameter der Klimatisierungsvorrichtung (2) in einer Ebene der Querschnittsprojektion (10') darstellbar sind; und
die Darstellung der Querschnittsprojektion des Innenraums (10') im Einstellmodus zumindest eine auf einem Fahrzeugsitz sitzende Person (13a; 13b) umfasst und die Perspektive der Darstellung in Richtung der Fahrzeuglängsachse ausgerichtet ist.

8. Bedienvorrichtung nach Anspruch 7,
**dadurch gekennzeichnet, dass**
die Bedienabsicht des Nutzers durch eine von der Bedienvorrichtung (5) umfasste Annäherungserfassungsvorrichtung (5b) als Annäherung eines Betätigungsobjekts an die Anzeigefläche (4a) durch einen Eintritt des Betätigungsobjekts in einen Detektionsbereich vor der Anzeigefläche (4a) erfasst wird.

9. Bedienvorrichtung nach einem der Ansprüche 7 oder 8,
**dadurch gekennzeichnet, dass**
die Eingabevorrichtung (5) eine berührungsempfindliche Oberfläche (5a) auf der Anzeigefläche (4a) umfasst.

10. Bedienvorrichtung nach einem der Ansprüche 7 bis 9,
**dadurch gekennzeichnet, dass**
durch die Belüftungselemente (2a; 2b; 2c; 2d) ein Luftstrom erzeugbar ist und mittels der Klimaerfassungsvorrichtung (3a) die Intensität und/oder die Richtung und/oder die Temperatur des erzeugten Luftstroms bestimmbar ist.

11. Bedienvorrichtung nach einem der Ansprüche 7 bis 10,
**dadurch gekennzeichnet, dass**
durch die Belüftungselemente (2a; 2b; 2c; 2d) ein Luftstrom erzeugbar ist und durch den Steuerbefehl der Steuereinheit die Belüftungselemente (2a; 2b; 2c; 2d) in Bezug auf die Intensität und/oder die Richtung und/oder die Temperatur des erzeugten Luftstroms einstellbar sind.

12. Bedienvorrichtung nach einem der Ansprüche 7 bis 11,
**dadurch gekennzeichnet, dass**
durch die Eingabevorrichtung Gesten des Nutzers in einem Erfassungsraum vor der Anzeigefläche (4a) als Eingabe erfassbar sind.

13. Bedienvorrichtung nach einem der Ansprüche 7 bis 12,
**dadurch gekennzeichnet, dass**
einzelne oder mehrere Belüftungselemente (2a; 2b; 2c; 2d) deaktivierbar sind und den deaktivierten Belüftungselementen (2a; 2b; 2c; 2d) zugeordnete Bereiche im Innenraum (10) in der graphischen Darstellung im Statusmodus und/oder im Einstellmodus mit veränderter Helligkeit und/oder veränderter Farbe gegenüber anderen Bereichen dargestellt werden.

14. Fahrzeug mit einer Bedienvorrichtung nach einem der Ansprüche 7 bis 13.

## Claims

1. Method for adjusting an air conditioning device (2) of a vehicle (1), having the steps:
determining parameters of the air conditioning device (2) which are generated by ventilation elements (2a; 2b; 2c; 2d);
activating a status mode of the air conditioning device (2) as a display mode, wherein in the status mode graphic data of a graphic display of a passenger compartment (10) of the vehicle (1) are generated and displayed in such a way that the passenger compartment (10) of the vehicle (1) and the parameters of the air conditioning device (2) are displayed in the passenger compartment (10); registering an operating intention of a user;
activating an adjusting mode of the air conditioning device (2) as a display mode if an operating intention of a user is registered, wherein in the adjusting mode graphic data of a graphic display of the passenger compartment (10) of the vehicle (1) are generated and displayed in such a way that the passenger compartment (10) of the vehicle (1) and the parameters of the air conditioning device (2) are displayed in the passenger compartment (10), wherein the display comprises graphic switching elements which can be operated;
registering an input of the user which is carried out with respect to the graphic switching elements which can be operated, on or in front of a display area (4a) for the graphic display; and
generating a control command for the air conditioning device (2) of the vehicle (1) as a function of which graphic switching element which can be operated the input was carried out with respect to;
**characterized in that**
in the adjustment mode a cross-sectional projection (10') of the passenger compartment (10) is displayed and the parameters of the air conditioning device (2) are displayed in a plane of the cross-sectional projection (10'); and
the display of the cross-sectional projection of the passenger compartment (10') in the adjustment mode comprises at least one person (13a; 13b) who is seated on a vehicle seat and the perspective of the display is oriented in the direction of the longitudinal axis of the vehicle.

2. Method according to Claim 1
**characterized in that**
in the adjustment mode the cross-sectional projection (10') is displayed perpendicularly with respect to the longitudinal axis of the vehicle (1), and the parameters of the air conditioning device (2) are displayed in the plane perpendicularly with respect to the longitudinal axis of the vehicle (1).

3. Method according to one of the preceding claims,
**characterized in that**
the intensity and/or the direction and/or the temperature of an airstream which is generated by the ventilation elements (2a; 2b; 2c; 2d) are determined as parameters, and during the displaying of the parameters of the air conditioning device (2) in the plane the intensity and/or the direction and/or the temperature of the airstream which is generated by the ventilation elements (2a; 2b) is displayed, wherein surfaces are displayed by means of colour and/or brightness, or wherein the size, colour and/or brightness of individual graphic objects display the intensity and/or the temperature of an airstream which flows through the illustrated plane.

4. Method according to one of the preceding claims,
**characterized in that**
the intensity and/or the direction and/or the temperature of an airstream which is generated by the ventilation elements (2a; 2b; 2c; 2d) is adjusted by the control command for the air conditioning device (2).

5. Method according to one of the preceding claims,
**characterized in that**
in the status mode the passenger compartment (10) and the parameters of the air conditioning device (2) are displayed in three-dimensional perspective fashion in the passenger compartment (10).

6. Method according to Claim 5,
**characterized in that**
in the status mode the passenger compartment (10) and the parameters of the air conditioning device (2) are displayed in the passenger compartment (10) from a direction which runs at an acute angle with respect to the longitudinal axis of the vehicle (1) in the direction of the front of the vehicle (1).

7. Operator control device for adjusting an air conditioning device (2) of a vehicle (1), having:
ventilation elements (2a; 2b; 2c; 2d) by means of which parameters of the air conditioning device (2) can be generated;
a climate-sensing device (3a) by means of which the parameters of the air conditioning device (2) can be determined;
an operator control device (5) by means of which an operating intention of a user can be registered, wherein, if an operating intention of a user is registered, an adjustment mode of the air conditioning device (2) can be activated as a display mode, and if no operating intention is registered, a status mode of the air conditioning device (2) can be activated as a display mode;
a control device (3) by means of which graphic data of a graphic display of the passenger compartment (10) of the vehicle (1) and/or of the parameters of the air conditioning device (2) can be generated as a function of the activated status, and can be displayed by means of a display area (4a), wherein in a method according to Claim 1,
in the status mode the passenger compartment (10) of the vehicle (1) and the parameters of the air conditioning device (2) can be displayed in the passenger compartment (10), and
in the adjustment mode the passenger compartment (10) of the vehicle (1) and the parameters of the air conditioning device (2) can be displayed in the passenger compartment (10), wherein the display comprises graphic switching elements which can be operated; and
an input device (5a) by means of which an input of the user, on or in front of the display area (4a) with respect to the graphic elements which can be operated, can be registered,
wherein
the control device (3) can generate a control command for the air conditioning device (2) of the vehicle (1) as a function of the input,
**characterized in that**
in the adjustment mode the graphic display is a cross-sectional projection (10') of the passenger compartment (10), and the parameters of the air conditioning device (2) can be displayed in a plane of the cross-sectional projection (10'); and
the display of the cross-sectional projection of the passenger compartment (10') in the adjustment mode comprises at least one person (13a; 13b) who is seated on a vehicle seat, and the perspective of the display is oriented in the direction of the longitudinal axis of the vehicle.

8. Operator control device according to Claim 7,
**characterized in that**
the operating intention of the user is registered by a proximity-sensing device (5b), included in the operator control device (5), as an approximation of an activation object to the display area (4a) by an entering of the activation object into a detection range in front of the display area (4a).

9. Operator control device according to either of Claims 7 and 8,
**characterized in that**
the input device (5) comprises a touch-sensitive surface (5a) on the display area (4a).

10. Operator control device according to one of Claims 7 to 9,
**characterized in that**
an air stream can be generated by the ventilation elements (2a; 2b; 2c; 2d), and the intensity and/or the direction and/or the temperature of the generated air stream can be determined by means of the climate-sensing device (3a).

11. Operator control device according to one of Claims 7 to 10,
**characterized in that**
an air stream can be generated by the ventilation elements (2a; 2b; 2c; 2d), and the ventilation elements (2a; 2b; 2c; 2d) can be adjusted with respect to the intensity and/or the direction and/or the temperature of the generated air stream by the control command of the control device.

12. Operator control device according to one of Claims 7 to 11,
**characterized in that**
gestures of the user in a sensing space in front of the display area (4a) can be sensed as an input by the input device.

13. Operator control device according to one of Claims 7 to 12,
**characterized in that**
individual ventilation elements (2a; 2b; 2c; 2d) or a plurality thereof, can be deactivated and regions in the passenger compartment (10) which are assigned to the deactivated ventilation elements (2a; 2b; 2c; 2d) are displayed in the graphic display in the status mode and/or in the adjustment mode with changed brightness and/or changed colour compared to other regions.

14. Vehicle having an operator control device according to one of Claims 7 to 13.

## Revendications

1. Procédé de réglage d'un dispositif de climatisation (2) d'un véhicule (1), comprenant les étapes suivantes :
détermination de paramètres du dispositif de climatisation (2) générés par des éléments de ventilation (2a ; 2b ; 2c ; 2d) ;
activation d'un mode d'état du dispositif de climatisation (2) en tant que mode d'affichage, des données graphiques d'une représentation graphique d'un espace intérieur (10) du véhicule (1) étant générées et affichées dans le mode d'état de telle sorte que l'espace intérieur (10) du véhicule (1) et les paramètres du dispositif de climatisation (2) dans l'espace intérieur (10) sont représentés ;
détection d'une intention d'opération d'un utilisateur ;
activation d'un mode de réglage du dispositif de climatisation (2) en tant que mode d'affichage lorsqu'une intention d'opération de l'utilisateur est détectée, des données graphiques d'une représentation graphique d'un espace intérieur (10) du véhicule (1) étant générées et affichées dans le mode de réglage de telle sorte que l'espace intérieur (10) du véhicule (1) et les paramètres du dispositif de climatisation (2) dans l'espace intérieur (10) sont représentés, la représentation comprenant des éléments de commutation graphiques actionnables ;
détection d'une saisie de l'utilisateur qui est exécutée en relation avec les éléments de commutation graphiques actionnables sur ou devant une surface d'affichage (4a) pour la représentation graphique ; et
génération d'une instruction de commande pour le dispositif de climatisation (2) du véhicule (1) en fonction de l'élément de commutation graphique actionnable en relation avec lequel a été exécutée la saisie ;
**caractérisé en ce que**
dans le mode de réglage, une projection en coupe transversale (10') de l'espace intérieur (10) est représentée et les paramètres du dispositif de climatisation (2) sont représentés dans un plan de la projection en coupe transversale (10') ; et
la représentation de la projection en coupe transversale de l'espace intérieur (10') en mode de réglage comprend au moins une personne (13a ; 13b) assise sur un siège du véhicule et la perspective de la représentation est orientée dans la direction de l'axe longitudinal du véhicule.

2. Procédé selon la revendication 1, **caractérisé en ce que** dans le mode de réglage, la projection en coupe transversale (10') est représentée perpendiculairement à l'axe longitudinal du véhicule (1) et les paramètres du dispositif de climatisation (2) sont représentés dans un plan perpendiculaire à l'axe longitudinal du véhicule (1).

3. Procédé selon l'une des revendications précédentes, **caractérisé en ce que** les paramètres déterminés sont l'intensité et/ou la direction et/ou la température d'un flux d'air généré à travers les éléments de ventilation (2a ; 2b ; 2c ; 2d) et l'intensité et/ou la direction et/ou la température d'un flux d'air généré à travers les éléments de ventilation (2a ; 2b ; 2c ; 2d) sont représentées lors de la représentation des paramètres du dispositif de climatisation (2), les surfaces étant représentées au moyen de couleur et/ou de luminosité, ou la taille, la couleur et/ou la luminosité des objets graphiques individuels représentant l'intensité et/ou la luminosité d'un flux d'air qui circule à travers le plan représenté.

4. Procédé selon l'une des revendications précédentes, **caractérisé en ce que** l'intensité et/ou la direction et/ou la température d'un flux d'air généré à travers les éléments de ventilation (2a ; 2b ; 2c ; 2d) sont réglées par l'instruction de commande du dispositif de climatisation (2).

5. Procédé selon l'une des revendications précédentes, **caractérisé en ce que** dans le mode d'état, l'espace intérieur (10) et les paramètres du dispositif de climatisation (2) dans l'espace intérieur (10) sont représentés en perspective tridimensionnelle.

6. Procédé selon la revendication 5, **caractérisé en ce que** dans le mode d'état, l'espace intérieur (10) et les paramètres du dispositif de climatisation (2) dans l'espace intérieur (10) sont représentés depuis une direction qui s'étend selon un angle aigu par rapport à l'axe longitudinal du véhicule (1) en direction de l'avant du véhicule (1).

7. Dispositif d'opération destiné à régler un dispositif de climatisation (2) d'un véhicule (1), comprenant :
des éléments de ventilation (2a ; 2b ; 2c ; 2d) par le biais desquels peuvent être générés les paramètres du dispositif de climatisation (2) ;
un dispositif de détection de conditions climatiques (3a) par le biais duquel peuvent être déterminés les paramètres du dispositif de climatisation (2) ;
un dispositif d'opération (5) par le biais duquel peut être détectée une intention d'opération d'un utilisateur, avec lequel, lorsqu'une intention d'opération d'un utilisateur est détectée, un mode de réglage du dispositif de climatisation (2) peut être activé en tant que mode d'affichage et, lorsqu'aucune intention d'opération n'est détectée, un mode d'état du dispositif de climatisation (2) peut être activé en tant que mode d'affichage ;
un dispositif de commande (5) par le biais duquel, en fonction de l'état activé, peuvent être générés des données graphiques d'une représentation graphique de l'espace intérieur (10) du véhicule (1) et/ou des paramètres du dispositif de climatisation (2) et peuvent être affichés au moyen d'une surface d'affichage (4a), et avec lequel, dans un procédé selon la revendication 1,
dans le mode d'état, l'espace intérieur (10) du véhicule (1) et les paramètres du dispositif de climatisation (2) peuvent être représentés et
dans le mode de réglage, l'espace intérieur (10) du véhicule (1) et les paramètres du dispositif de climatisation (2) peuvent être représentés, la représentation comprenant des éléments de commutation graphiques actionnables ; et
un dispositif de saisie (5a) par le biais duquel peut être détectée une saisie de l'utilisateur en relation avec les éléments de commutation graphiques actionnables sur ou devant une surface d'affichage (4a),
une instruction de commande pour le dispositif de climatisation (2) du véhicule (1) pouvant être générée en fonction de la saisie ;
**caractérisé en ce que**
dans le mode de réglage, la représentation graphique d'une projection en coupe transversale (10') de l'espace intérieur (10) et les paramètres du dispositif de climatisation (2) peuvent être représentés dans un plan de la projection en coupe transversale (10') ; et
la représentation de la projection en coupe transversale de l'espace intérieur (10') en mode de réglage comprend au moins une personne (13a ; 13b) assise sur un siège du véhicule et la perspective de la représentation est orientée dans la direction de l'axe longitudinal du véhicule.

8. Dispositif d'opération selon la revendication 7, **caractérisé en ce que** l'intention d'opération de l'utilisateur est détectée par un dispositif de détection d'approche (5b) que comprend le dispositif d'opération (5) sous la forme d'une approche d'un objet d'actionnement de la surface d'affichage (4a) par une pénétration de l'objet d'actionnement dans une zone de détection devant la surface d'affichage (4a) .

9. Dispositif d'opération selon l'une des revendications 7 ou 8, **caractérisé en ce que** le dispositif de saisie (5) comprend une surface tactile (5a) sur la surface d'affichage (4a).

10. Dispositif d'opération selon l'une des revendications 7 à 9, **caractérisé en ce qu'**un flux d'air peut être généré à travers les éléments de ventilation (2a ; 2b ; 2c ; 2d) et l'intensité et/ou la direction et/ou la température d'un flux d'air généré peuvent être déterminées au moyen du dispositif de détection de conditions climatiques (3a).

11. Dispositif d'opération selon l'une des revendications 7 à 10, **caractérisé en ce qu'**un flux d'air peut être généré à travers les éléments de ventilation (2a ; 2b ; 2c ; 2d) et les éléments de ventilation (2a ; 2b ; 2c ; 2d) peuvent être réglés en rapport avec l'intensité et/ou la direction et/ou la température d'un flux d'air généré par le biais de l'instruction de commande de l'unité de commande.

12. Dispositif d'opération selon l'une des revendications 7 à 11, **caractérisé en ce que** des gestes de l'utilisateur dans un espace de détection devant la surface d'affichage (4a) peuvent être détectés en tant que saisie par le dispositif de saisie.

13. Dispositif d'opération selon l'une des revendications 7 à 12, **caractérisé en ce que** certaines ou plusieurs des éléments de ventilation (2a ; 2b ; 2c ; 2d) peuvent être désactivés et, en mode d'état et/ou en mode de réglage, les zones dans l'espace intérieur (10) qui sont associées aux éléments de ventilation (2a ; 2b ; 2c ; 2d) désactivés sont représentées dans la représentation graphique avec une luminosité modifiée et/ou une couleur modifiée par rapport aux autres zones.

14. Véhicule équipé d'un dispositif d'opération selon l'une des revendications 7 à 13.
